# EUROPÄISCHE PATENTSCHRIFT

(11) **EP 1 291 103 B1**
(45) Veröffentlichungstag und Bekanntmachung des Hinweises auf die Patenterteilung: **24.08.2011**
(21) Anmeldenummer: 02020162.0
(22) Anmeldetag: 09.09.2002
(51) Int. Cl.: B23B 31/20, B23B 31/30

(54) **Spannvorrichtung**
Chuck
Mécanisme de serrage

(30) Priorität: 11.09.2001 CH 16752001; 06.06.2002 CH 9662002
(43) Veröffentlichungstag der Anmeldung: 12.03.2003
(73) Patentinhaber: Rego-Fix AG, 4456 Tenniken (CH)
(72) Erfinder: Gerber, Ernst, CH-4418 Reigoldswil (CH)
(74) Vertreter: Braun, André jr.

(56) Entgegenhaltungen:
- DE-A- 19 622 297
- DE-C- 907 233
- DE-U- 1 954 720
- US-A- 5 904 451
- US-B1- 6 264 208

## Beschreibung

Die Erfindung betrifft eine Spannvorrichtung bestehend aus einer Spannzange mit Aussenkonus und einem Spannzangenhalter mit Aufnahmekonus für das Einspannen eines rotierenden Teils, vorzugsweise eines Werkzeugs.

Die meisten bekannten Spannvorrichtungen dieser Art beruhen auf dem Prinzip, dass durch das Zusammenwirken von Spannzangenhalter und Spannzange ein radialer Druck auf den Werkzeugschaft ausgeübt wird, durch den das Werkzeug sicher gehalten wird. Bei einer häufig vorkommenden Form besitzt der Spannzangenhalter einen Innenkonus, in dem die gleichwinklig konische Spannzange mittels einer Spannmutter fixiert wird. Die Spannzange ist geschlitzt, so dass sie beim Hineinpressen in den Spannzangenhalter einen radialen Druck auf einen eingesetzten Werkzeugschaft ausübt (vgl. z.B. WO-98/32563).

Ein wichtiger Gesichtspunkt bei derartigen Spannvorrichtungen ist ausserdem das Vermeiden von Unwucht. Einerseits sind meistens Mittel zum Auswuchten vorgesehen, aber andererseits sollten die Möglichkeiten des Auftretens von Unwucht schon von vornherein weitgehend eliminiert werden. Diese letztere Forderung führt zu der Vorgabe, dass eine Spannvorrichtung aus möglichst wenig Einzelteilen bestehen und geometrisch möglichst einfach gestaltet sein sollte. So ist in EP-668810 eine Version einer Spannvorrichtung vorgeschlagen, die ohne Spannmutter auskommt. Die Spannzange oder -hülse ist zylindrisch und wird hydraulisch in der Aufnahme gehalten. Diese Ausführungsform besitzt somit zwar ein Teil weniger, nämlich die Spannmutter, aber dafür ist die Hydraulikeinrichtung um so komplizierter, so dass dies noch nicht die optimale Lösung zu sein scheint.

Einen anderen Lösungsweg stellen die sog. Schrumpffutter zum thermischen Einschrumpfen des Werkzeugschafts dar. Diese erfüllen zwar die Forderung nach weitestgehender konstruktiver Einfachheit und dem Minimum an Einzelteilen; dem stehen aber andere Nachteile gegenüber, wie z.B. die Wartezeiten zum Abkühlen oder die Gefahr von Verbrennungen bei der Handhabung.

Aus DE-4405242 ist eine andere Form einer Spannvorrichtung mit Aussenkonus an der Spannzange und Innenkonus an der Aufnahme bekannt, die ohne Spannmutter auskommt. Bei dieser Lösung sollen die Rundlaufeigenschaften dadurch verbessert werden, dass durch eine geringe Konizität eine in axialer Richtung annähernde Konstanz der Wandstärke der Aufnahme gegeben ist. Gleichzeitig wird eine geringe Wandstärke der Spannzange vorgeschlagen. Dem steht jedoch ein sehr komplizierter Aufbau der Vorrichtung zum Einziehen der Spannzange in den Aufnahmekonus gegenüber.

Der Erfindung liegt die Aufgabe zugrunde, bei einer Spannvorrichtung möglichst optimale Rundlaufeigenschaften sowie Einfachheit in Aufbau und Handhabung zu erreichen und gleichzeitig die vorgenannten Nachteile der verschiedenen bekannten Spannvorrichtungen zu vermeiden.

Erfindungsgemäss wird dies gelöst durch eine Spannvorrichtung mit den Merkmalen des Anspruchs 1.

Im folgenden wird anhand der beiliegenden Zeichnungen ein bevorzugtes Ausführungsbeispiel der Erfindung beschrieben. Es zeigen
- Fig.1: eine Spannvorrichtung mit eingesetztem Werkzeug, teilweise im Schnitt
- Fig.2: die Spannzange separat
- Fig.3: den Spannzangenhalter separat
- Fig.4: eine Spannvorrichtung mit eingesetztem Gewindebohrwerkzeug
- Fig.5: mehrere Ansichten der Spannzange gemäss Fig.4
- Fig.6-7: weitere Ausführungsformen der Spannzange
- Fig.8-11: Spannvorrichtungen mit zusätzlicher Sicherung der Spannzange

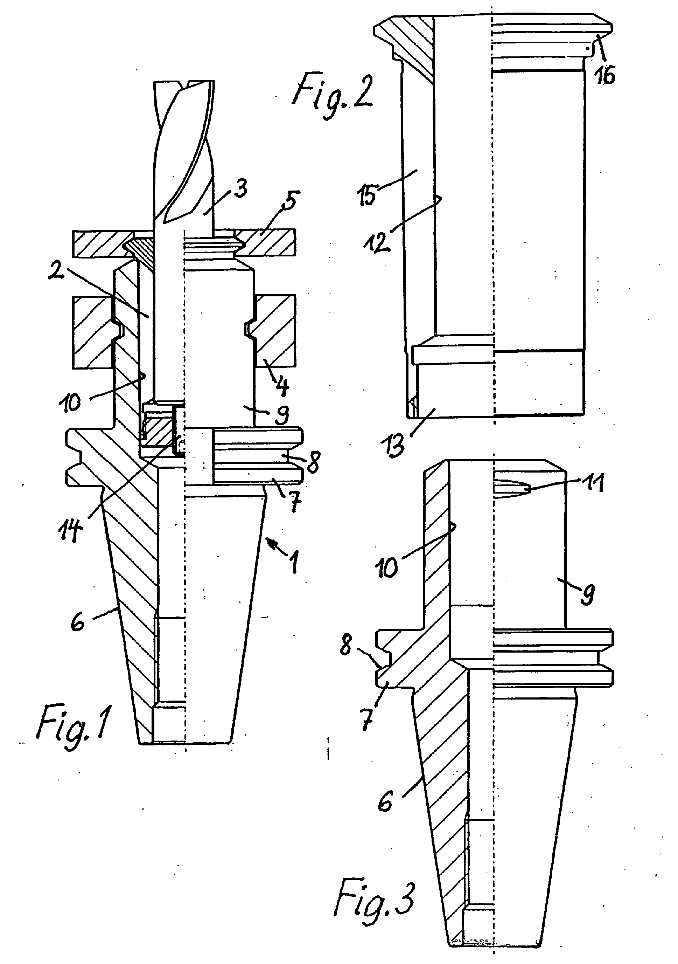

Die in Fig. 1 gezeigte Spannvorrichtung besteht aus einem Spannzangenhalter 1 und einer werkzeugseitig in diesen eingesetzten Spannzange oder -hülse 2. In der Bohrung der Spannzange ist ein Werkzeug 3, im vorliegenden Fall z.B. ein Fräser, eingesetzt. Selbstverständlich eignet sich die Spannvorrichtung auch für andere, vor allem spanabhebende Werkzeuge. Ausserdem sind schematisch Backen 4,5 einer (nicht gezeigten) Presse angedeutet, mit der die Spannzange in den Halter eingepresst oder herausgezogen wird.

Der in Fig. 3 auch einzeln gezeigte Spannzangenhalter 1 hat beim vorliegenden Ausführungsbeispiel die bekannte Form mit einem antriebsseitigen, d.h. maschinenseitigen Konus 6, einem Ringflansch 7 mit einer umlaufenden Nut 8 und einem werkzeugseitigen Teil 9 mit zylindrischer Aussenfläche.

Der werkzeugseitige Teil 9 weist eine koaxiale Ausnehmung 10 auf, die der Aufnahme der Spannzange dient. Die Ausnehmung 10 ist zur Maschinenseite hin konisch verengt.

Als Konuswinkel bzw. Konizität wird in der vorliegenden Beschreibung der Oeffnungswinkel des Konus d.h. der Winkel zwischen einander gegenüberliegenden Erzeugenden bzw. Mantellinien der konischen Fläche und ihrer Achse bezeichnet. Dieser Konuswinkel ist kleiner als der sog. Selbsthemmungswinkel von ca. 5°, vorzugsweise kleiner als 2°.

Die Aussenseite des zylindrischen Teils 9 ist mit zwei tangentialen Nuten 11 oder einer umlaufenden Nut versehen, die dem Eingriff eines Backens 4 der Presse dient.

Die in Fig. 2 auch separat gezeigte Spannzange 2 hat über den grössten Teil ihrer Aussenfläche eine schwache Kegelform mit einer zum Innenkonus des Spannzangenhalters komplementären Konizität. An ihrem werkzeugseitigen Ende ist sie mit einem flanschförmigen Kopf 16 versehen, der dem Ansetzen eines Backens 5 der Presse zum Einpressen und Herausziehen dient.

Eine zylindrische Bohrung 12 dient der Aufnahme des Schafts eines Werkzeugs 3. Das maschinenseitige Ende 13 mit einem Gewindezapfen 35 verschlossen und mit einer Stellschraube 14 zum Einstellen der Einsetztiefe bzw. der Auskragung des Werkzeugs versehen. Die Wand zwischen dem Kopf 16 und dem maschinenseitigen Ende ist mit mehreren radial geführten Schlitzen 15 zur Erhöhung der radialen Elastizität versehen. Wenn die Spannzange 2 mit eingesetztem Werkzeug 3 in die konische Ausnehmung des Spannzangenhalters 1 gepresst ist, besteht ein radialer Druck, durch den das Werkzeug sicher gehalten wird. Da der Konuswinkel kleiner ist als der Selbsthemmungswinkel, muss die Spannzange, nachdem sie eingepresst ist, nicht mehr zusätzlich im Halter befestigt werden.

Da beim Einpressen und Herausziehen der Spannzange hohe Reibungskräfte auftreten, kann der Aussenkonus der Spannzange und/oder der Innenkonus des Halters mit einer reibungsvermindernden Beschichtung versehen sein, um ein Fressen zu vermeiden. Die Spannzange kann aus unterschiedlichen Materialien bestehen, z.B. hochfestem Metall, Keramik (z.B. Zirkonium-Keramik), hochfestem Kunststoff.

Das hier am Beispiel einer Spannvorrichtung für Werkzeugmaschinen gezeigte Prinzip der Verbindung von rotierenden Teilen ist nicht auf Werkzeughalterungen beschränkt, sondern allgemein zur Verbindung von Wellen, Bolzen, Spindeln etc. einsetzbar.

Die Vorrichtung zum Einpressen und Lösen der Spannzange kann mechanisch, elektrisch, pneumatisch oder hydraulisch arbeiten.

Die erfindungsgemässe Spannvorrichtung zeichnet sich durch eine Reihe von z.T. überraschenden Vorteilen aus. Die auf das Werkzeug ausgeübte Haltekraft ist höher als bei Schrumpffuttern; die Spannvorrichtung besitzt keinen Spannmechanismus, d.h. keine Teile, die zusätzliche Unwucht verursachen können; wegen der Selbsthemmung ist keine Verriegelung nötig; die Herstellung ist einfach und kostengünstig.

Wegen der hervorragenden Eigenschaften dieser Spannvorrichtung eignet sie sich besonders als Aufnahme für Werkzeuge, bei denen speziell hohe Präzision hinsichtlich Rundlauf, Wuchtgüte und Wiederholgenauigkeit gefordert sind.

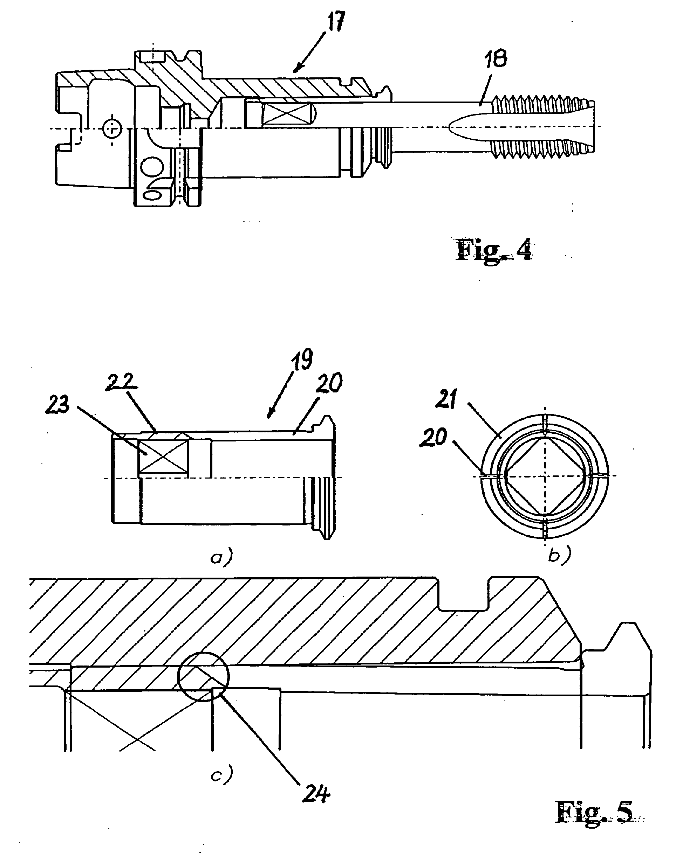

Die in Fig. 4 gezeigte Spannvorrichtung 17 für ein Gewindebohrwerkzeug 18 zeichnet sich durch eine Reihe von zusätzlichen Merkmalen aus, von denen in dieser Darstellung vor allem ein Vierkant zur Aufnahme des beim Gewindeschneiden auftretenden hohen Drehmoments zu sehen ist. Die weiteren Merkmale sind vor allem aus Fig. 5 ersichtlich und werden im folgenden beschrieben. Die Spannhülse 19 ist in ihrem werkzeugseitigen Teil durch vier Schlitze 20 in vier viertelzylindrische Segmente 21 aufgetrennt, die eine gewisse federnde Biegung in radialer Richtung zulassen. Dadurch ist eine Aufweitung dieses Bereichs zur Aufnahme grösser tolerierter Werkzeugschäfte möglich. In ihrem geschlossenen maschinenseitigen Teil 22 ist ein Innenvierkant 23 vorgesehen zur Aufnahme des Vierkants eines Werkzeugs.

Wenn ein Werkzeug eingesetzt ist und sich die Spannzange im Halter befindet, ist der Werkzeugsitz durch drei Wirkungen definiert, nämlich durch Kraftschluss im ungeschlitzten Teil, durch Formschluss infolge des Vierkants und durch Führung und Halterung des Werkzeugschafts im geschlitzten Teil. Im Uebergangsbereich zwischen dem geschlossenen und dem geschlitzten Teil der Spannzange, der in Fig. 5c durch einen Kreis 24 markiert ist, entsteht eine Art Drehpunkt durch die unterschiedlichen Presskräfte zwischen Halterbohrung und Spannzange.

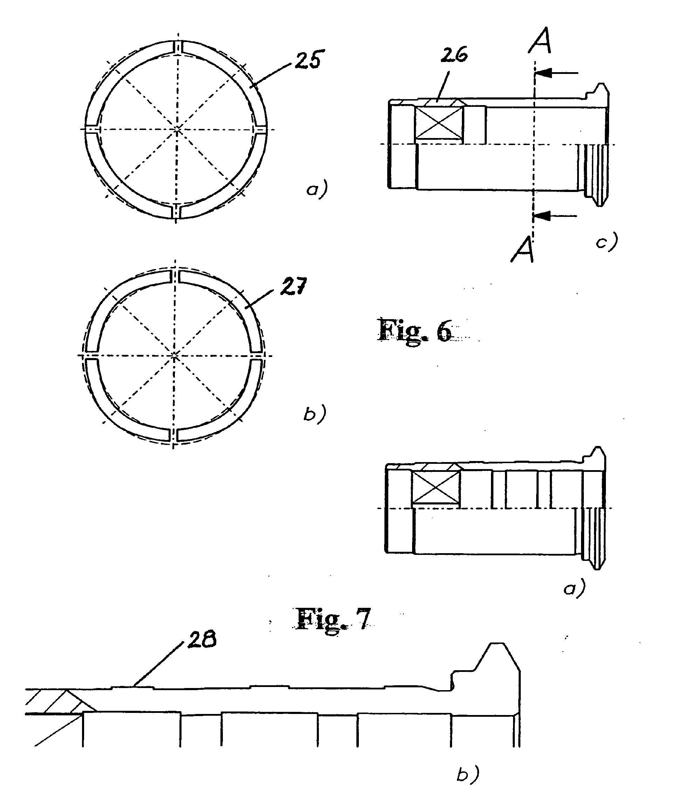

Bei den in Fig. 6a und 6b gezeigten Ausführungsformen sind die durch Schlitze getrennten Segmente zusätzlich in radialer Richtung verformt. Die Segmente 25 der in Fig. 6a gezeigten Ausführungsform haben eine geringere Krümmung als der ungeschlitzte Teil 26. Dadurch wird der Werkzeugschaft zuerst in der Mitte des Segments geklemmt und zentriert. Bei der Ausführungsform gemäss Fig. 6b ist die Krümmung der Segmente 27 stärker, so dass der Werkzeugschaft zuerst an den Kanten der Segmente entlang der Schlitze geklemmt und zentriert, wird.

Bei der in Fig. 7 gezeigten Ausführungsform besitzen die durch Schlitze getrennten Segmente jeweils abwechselnd an ihren Innen- und an ihren Aussenflächen einen oder mehrere ringförmig umlaufende flache Erhöhungen 28, durch die eine Art wellenförmige Kraftverteilung und eine entsprechende Federwirkung entsteht.

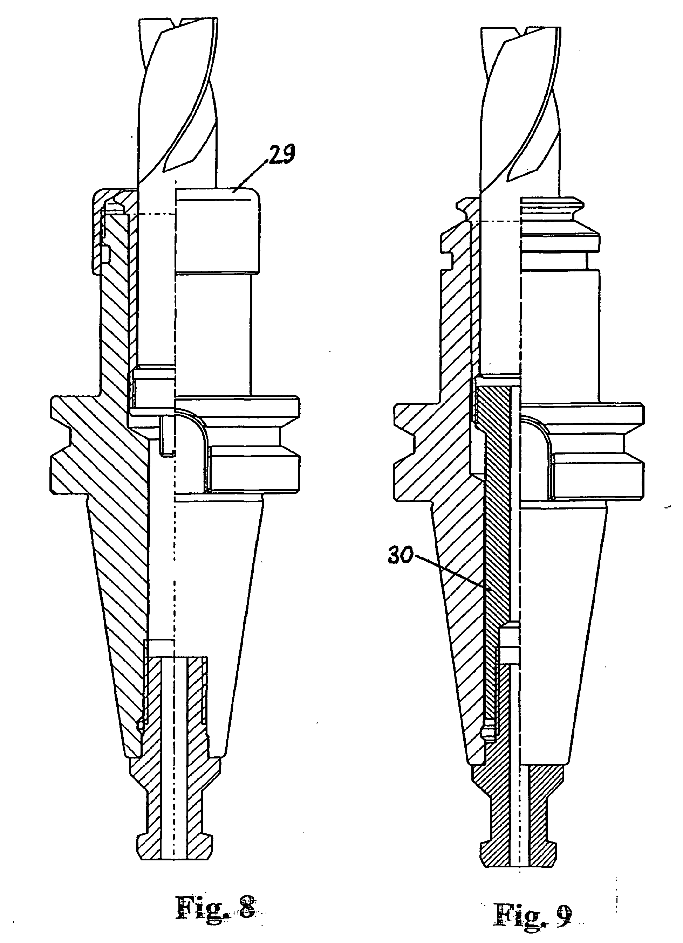

Wie schon erwähnt, ist wegen der Selbsthemmung infolge des kleinen Konuswinkels keine Verriegelung der Spannzange im Halter erforderlich. Es kann aber für besonders kritische Betriebsbedingungen, z.B. starke Vibrationen etc., erwünscht sein, eine Sicherung vorzusehen. Eine Möglichkeit einer solchen Sicherung ist die in Fig. 8 gezeigte Kappe 29, die mit einem Innengewinde auf ein aussen an der Mantelfläche des Halters angeordnetes Gewinde aufschraubbar ist und mit ihrem nach innen gerichteten Flansch die Spannzange hält. Da diese Kappe nur der Sicherung dient und mit ihr nicht die von einer Spannmutter bekannten Kräfte aufgebracht werden müssen, kann sie sehr leicht sein, so dass sie kein wesentliches Unwuchtproblem darstellt.

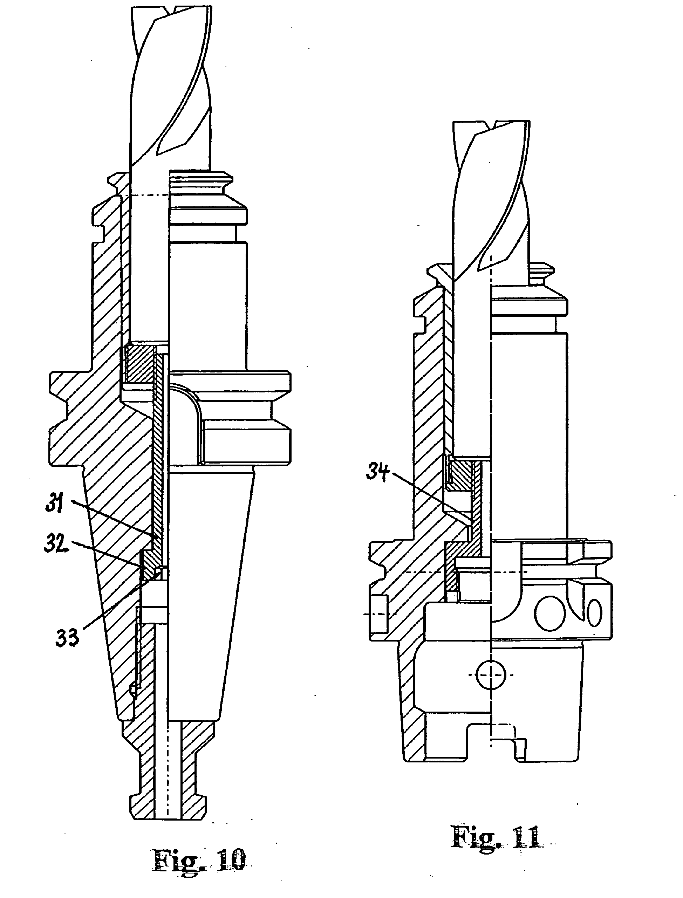

Noch günstiger im Hinblick auf die Vermeidung von Unwucht ist die in Fig.9 gezeigte Lösung, bei welcher der Tiefenanschlag für das Werkzeug als langgestreckte Hülse 30 ausgebildet ist, die mittels Gewinden von der Rückseite des Halters her gehalten wird. Eine etwas andere Form ist in Fig. 10 gezeigt. In den Tiefenanschlag ist eine längliche Hülse 31 einschraubbar, die auf der dem Werkzeug abgewandten Seite mit einer Verdickung 32 hinter eine Stufe im Halter greift. Zum Verschrauben dient ein Innensechskant 33 in der Hülse. In Fig. 11 ist eine der vorstehenden ähnliche Lösung mit einer in den Tiefenanschlag einschraubbaren Hülse 34 für einen sog. Hohlschaftkegel gezeigt.

Die Spannzangen der erfindungsgemässen Spannvorrichtung können selbstverständlich metallisch dichtend ausgeführt sein. Wenn die Schlitze der Spannzange von der Werkzeugseite her eingebracht sind, besteht zwischen dem geschlossenen maschinenseitigen Teil der Spannzange, dem Werkzeugschaft und der Halter ein dichtender Ring. Die Schlitze können auch von der Maschinenseite her eingebracht sein. In diesem Fall besteht ein dichtender Ring zwischen dem werkzeugseitigen geschlossenen Teil, dem Werkzeugschaft und der Halter. Schliesslich können die Schlitze auch abwechselnd von der Maschinen und der Werkzeugseite her eingebracht sein. Die Dichtung besteht dann abwechselnd im vorderen und im hinteren Teil der Spannzange zwischen ihr, dem Werkzeugschaft und der Halter. Es sind zwei oder mehr Schlitze möglich.

## Patentansprüche

1. Spannvorrichtung bestehend aus einer Spannzange (2)
mit einem zur Maschinenseite hin verjüngten Aussenkonus und einem Spannzangenhalter (1) mit einem zur Maschinenseite hin verjüngten Aufnahmekonus für das Einspannen eines rotierenden Teils (3), vorzugsweise eines Werkzeugs, wobei der Aufnahmekonus des Spannzangenhalters und der Aussenkonus der Spannzange einen Konuswinkel aufweisen, der kleiner ist als der Selbsthemmungswinkel, **dadurch gekennzeichnet, dass** die Spannzange einen Kopf (16) zum Ansetzen einer axialen Kraft zu ihrem Einpressen in den Halter und zum Herausziehen aus dem Halter besitzt.

2. Spannvorrichtung nach Anspruch 1, **dadurch gekennzeichnet, dass** die Spannzange (2) radial geführte Schlitze (15,20) aufweist.

3. Spannvorrichtung nach Anspruch 1, **dadurch gekennzeichnet, dass** der Konuswinkel kleiner ist als 5°.

4. Spannvorrichtung nach Anspruch 3, **dadurch gekennzeichnet, dass** der Konuswinkel kleiner ist als 2°.

5. Spannvorrichtung nach Anspruch 1, **dadurch gekennzeichnet, dass** am antriebsseitigen Ende der Spannzange eine koaxial angeordnete Anschlagschraube (14) vorgesehen ist.

6. Spannvorrichtung nach Anspruch 2 **dadurch gekennzeichnet, dass** durch die Schlitze (20) gebildete Segmentte (21) in radialer Richtung verformt sind.

7. Spannvorrichtung nach Anspruch 2, **dadurch gekennzeichnet, dass** durch die Schlitze gebildete Segmente mit abwechselnd an den Aussen- und Innenflächenumlaufenden Erhöhungen (28) versehen sind.

8. Spannvorrichtung nach Anspruch 1, **gekennzeichnet, durch** eine Sicherungskappe (29).

9. Spannvorrichtung nach Anspruch 1, **gekennzeichnet, durch** eine innere Rückzugshülse (30) mit Sicherungsmitteln (32).

## Claims

1. Clamping device comprising a collet chuck (2) with an outer cone tapering towards the machine side and a collet chuck holder (1) with a receiving cone tapering towards the machine side for clamping a rotating part (3), preferably a tool, wherein the receiving cone of the collet chuck holder and the outer cone of the collet chuck have a cone angle that is smaller than the self-locking angle, **characterized in that** the collect chuck has a head (16) for applying an axial force for pressing it into the holder and for withdrawing it from the holder.

2. Clamping device according to claim 1, **characterized in that** the collet chuck (2) has radially guided slots (15, 20).

3. Clamping device according to claim 1, **characterized in that** the cone angle is less than 5°.

4. Clamping device according to claim 3, **characterized in that** the cone angle is less than 2°.

5. Clamping device according to claim 1, **characterized in that** a coaxially arranged dog screw (14) is provided on the drive-side end of the collet chuck.

6. Clamping device according to claim 2, **characterized in that** segments (21) formed by the slots (20) are deformed in the radial direction.

7. Clamping device according to claim 2, **characterized in that** segments formed by the slots are provided with peripheral elevations (28) alternately on the outer surfaces and the inner surfaces.

8. Clamping device according to claim 1, **characterized by** a safety cap (29).

9. Clamping device according to claim 1, **characterized by** an inner retractor sleeve (30) with securing means (32).

## Revendications

1. Mécanisme de serrage, composé d'une pince de serrage (2) avec un cône extérieur s'amincissant en direction du côté machine et un support (1) de pince de serrage avec un cône de réception s'amincissant en direction du côté machine pour le serrage d'une pièce tournante (3), de préférence d'un outil, dans lequel le cône de réception du support de pince de serrage et le cône extérieur de la pince de serrage présentent un angle de cône qui est inférieur à l'angle d'arrêt automatique, **caractérisé en ce que** la pince de serrage possède une tête (16) pour appliquer une force axiale destinée à l'enfoncer dans le support et à l'extraire du support.

2. Mécanisme de serrage selon la revendication 1, **caractérisé en ce que** la pince de serrage (2) présente des fentes (15, 20) guidées radialement.

3. Mécanisme de serrage selon la revendication 1, **caractérisé en ce que** l'angle de cône est inférieur à 5°.

4. Mécanisme de serrage selon la revendication 3, **caractérisé en ce que** l'angle de cône est inférieur à 2°.

5. Mécanisme de serrage selon la revendication 1, **caractérisé en ce qu'**à l'extrémité côté entraînement de la pince de serrage est prévue une vis de butée (14) disposée coaxialement.

6. Mécanisme de serrage selon la revendication 2, **caractérisé en ce que** des segments (21) formés par les fentes (20) sont déformés dans la direction radiale.

7. Mécanisme de serrage selon la revendication 2, **caractérisé en ce que** des segments formés par les fentes sont munis de reliefs (28) périphériques en alternance sur les surfaces extérieures et intérieures.

8. Mécanisme de serrage selon la revendication 1, **caractérisé par** un embout de sécurité (29).

9. Mécanisme de serrage selon la revendication 1, **caractérisé par** une douille de recul intérieure (30) avec des moyens de sécurité (32).
